# EUROPEAN PATENT APPLICATION

(11) **EP 2 716 151 A1**
(43) Date of publication of application: **09.04.2014**
(21) Application number: 13187452.1
(22) Date of filing: 04.10.2013
(51) Int. Cl.: A01G 13/00

(54) **A holding device for holding a weather-protection sheet in a rolled-up position**

(30) Priority: 05.10.2012 IT VR20120198
(71) Applicant: Frutop S.r.l., 39018 Terlano (BZ) (IT)
(72) Inventor: Tamanini, Emanuel, 39100 Bolzano (IT)
(74) Representative: Marchi, Paolo

(57) **Abstract**

The present disclosure relates to a holding device (1) for holding a weather-protection sheet (90) in a rolled-up position. The holding device (1) comprises a body (2), which can be mounted on a supporting cable (92) for the protection sheet (90), and an elongated flexible member (3) having a first portion (31) fixed to the body (2). The flexible member (3) can assume a first condition, in which the flexible member (3) is substantially outstretched, and a second condition, in which the flexible member (3) is bent substantially like a ring. A seat (25) is made in the body (2) and is adapted to receive a second portion (32) of the flexible member (3) when the flexible member (3) is in the second condition. The holding device (1) further comprises a locking element (4) that is mounted on said body (2) and is movable between a locking position and a release position, to reversibly lock the second portion (32) of the flexible member (3) in the seat (25). The flexible member (3) in the second condition is adapted to encircle and hold the rolled-up protection sheet (90), whereas the flexible member (3) in the first condition is adapted to let the protection sheet (90) free. The present disclosure relates to a weather-protection system (9) as well.

## Description

The present disclosure relates to the general field of crop protection from bad weather. In particular, the present disclosure relates to a device for holding a weather-protection sheet in a rolled-up position, for example when the sheet is mounted in a protection system but it is not in operation.

The protection of crops from bad weather is a widely-felt need in agriculture. For example, in the fruit sector there is the need to protect fruits on the branches of the plants from the destructive effects of hail. For some fruit types there is also a need for protection from heavy rain. In other cases, a partial shielding against sun and its parching action on crops is required.

The use of weather-protection sheets is common in the prior art to provide the required protection. A weather-protection system is usually composed of support poles driven into the ground next to the cultivated plants, cables stretched between the support poles to create a support for the weather-protection sheets, and weather-protection sheets that are positioned each astride a respective supporting cable; the flaps of the adjacent sheets are joined together by appropriate systems. A covering surface, composed of the sheets themselves, that covers the cultivated plants and protects them from bad weather, is thus obtained. Basically, the covering surface is a pitched covering, in which the supporting cables are the ridge lines of the pitched covering and the joints between the adjacent sheets are the bottom lines of the pitched covering.

A weather protection is usually required only during certain seasons of the year. For example, hail protection is required only during summer, when the fruits are ripening on the plant and then they could be severely damaged by a hailstorm. During the remainder of the year, the hail-protection sheets are usually released from each other and are rolled up and fastened in a rolled-up position to the respective supporting cables at the ridges of the covering.

In the prior art, the fastening of the rolled-up sheets is manually carried out by using pieces of rope, cable ties or other similar systems, which are used to tie the rolled-up sheet to the supporting cable. Therefore, during this operation, an operator should have a large amount of pieces of rope or the like with him, to apply one piece after the other along the rolled-up sheet until the fastening of the entire sheet is achieved.

A variant of this mode is shown for example in French patent application No. FR2778061, where flexible straps are prearranged on a support tube for the weather-protection sheet.

When the weather-protection sheet is to be spread out again to protect the cultivated plants, the operator cuts or unties the pieces of rope or the straps, releasing the sheet that then can be unrolled.

These prior-art modes are awkward and rather laborious. For example, during the fastening of the sheet in rolled-up position, the operator is in an uncomfortable condition, often balancing on a ladder and supporting the weight of the sheet that tends to unroll; the operations of taking a piece of rope from a container and tying a knot to tighten the piece of rope around the rolled-up sheet can be difficult and awkward in such an uncomfortable condition.

Similarly, the operation of releasing the sheet requires the operator to act in a similar uncomfortable condition and to cut the pieces of rope the one after the other, thus spending a certain amount of time. Moreover, the cut pieces of rope fall onto the ground and should be picked up later.

European patent application No. EP1417881 discloses a device for fixing a protective netting on a ridge. The device uses spaced clamps that are attached to a supporting wire for a protective netting. Each clamp has a cable for locking the protective netting. The clamp has a closed channel and an open channel: a first end of the cable is fixed in the closed channel and a second end of the cable can be inserted into the open channel to hold the rolled-up netting. The second end of the cable can be removed from the open channel to release the netting.

A drawback of this solution is that the second end could spontaneously release itself from the open channel, for example when a strong wind moves the rolled-up netting and the cable. In other words, the solution of EP1417881 does not ensure a steady holding of the rolled-up netting. Moreover, the insertion / removal of the second end into / from the open channel is still a laborious and awkward operation, because the opening of the channel is narrow in comparison with the diameter of the cable and then this operation requires manual skill and strength.

Thus, the present disclosure moves from the technical problem of providing a fastening or holding of a rolled-up weather-protection sheet, which allows to overcome the drawbacks mentioned above with reference to the prior art and / or to achieve further advantages.

This is obtained by providing a holding device for holding a weather-protection sheet in a rolled-up position, according to independent claim 1. The technical problem is solved by a weather-protection system according to claim 11 as well.

Specific embodiments of the subject of the present disclosure are defined in the corresponding dependent claims.

One aspect, on which the solution offered by the present disclosure is based, is to provide a holding device that can be mounted on a support (in particular a supporting cable) for the protection sheet and can assume a first condition, in which it lets the sheet free, and a second condition, in which it locks the rolled-up protection sheet (or at least a portion of the latter). In other words, a holding device is provided, said holding device being an accessory for a protection system and being mountable on the system itself to simplify the operations of fastening and releasing the rolled-up protection sheet.

This is useful for providing a protection system wherein the operator is not required to have with him pieces of rope, cable ties or other elements for fastening the rolled-up sheet; in fact, each holding device is pre-mounted on the system and then it can be directly used to fasten the rolled-up sheet when this is required.

Furthermore, the holding device is configured for a simple and fast fastening of the rolled-up sheet: this is useful for speeding up the fastening operations and minimizing the stay of the operator in an uncomfortable working condition.

The holding device, being able to reversibly assume said first condition and second condition, can be used several times over the course of time: a same holding device can then be used for several years with a sequence of cycles of rolling and unrolling of the protection sheet.

Specifically, the holding device comprises a locking element that is movable between two positions (a release position and a locking position) that correspond to said first condition and said second condition, respectively. This is useful for allowing a comfortable and simple carrying out of the fastening and releasing operations by an operator. Furthermore, the locking element in the locking position prevents any unintentional release of the rolled-up protection sheet.

In one embodiment, the holding devices mounted on a same supporting cable are connected together by a single control rope. Through the control rope, an operator can lead all the holding devices, which are connected to the control rope, towards the first condition of release of the protection sheet. This is useful for providing a protection system in which, with a single operation, an entire rolled-up protection sheet is released from the fastening; in this way, times and operations required for putting the sheets into the protection position are considerably reduced.

Further advantages, characteristic features and the modes of use of the subject of the present disclosure will be made evident in the following detailed description of an embodiment thereof, given by way of example and not for limitative purposes. However, it is evident that each embodiment of the subject of the present disclosure may have one or more of the advantages listed above; in any case, it is not required for each embodiment to concomitantly have all the listed advantages.

Reference will be made to the figures of the annexed drawings, wherein:
- Figure 1 shows a perspective view of a holding device according to the present disclosure;
- Figure 2 shows a perspective view, partially sectional and broken, of a body of the holding device of Figure 1, in a locking position;
- Figure 3 shows a perspective view, partially sectional and broken, of the body of the holding device of Figure 1, in a release position;
- Figure 4 shows a side view of the body of the holding device of Figure 1, in the locking position;
- Figure 5 shows a side view of the body of the holding device of Figure 1, in the release position;
- Figure 6 shows a perspective view of the body of the holding device of Figure 1, in an open condition before being mounted in a protection system;
- Figures 7 and 8 show two phases for mounting the holding device of Figure 1 in a protection system;
- Figure 9 shows a detail of a protection system, in which a holding device of Figure 1 is in the release position and a protection sheet is spread out;
- Figure 10 shows a detail of a protection system, in which a holding device of Figure 1 is in the locking position and a protection sheet is held in a rolled-up position;
- Figure 11 shows a perspective view of a protection system comprising a plurality of holding devices of Figure 1 that hold protection sheets in a rolled-up position;
- Figure 12 shows an enlarged detail of the protection system of Figure 11, during a phase of release of a rolled-up protection sheet.

With reference to the annexed figures, a holding device according to the present disclosure is denoted by reference number 1. The holding device 1 is adapted to be mounted in a weather-protection system (denoted by reference number 9) for holding a weather-protection sheet 90 when the latter is in a rolled-up position.

The present detailed description refers in particular to a hail-protection system, to protect the plants 99 of an orchard or a cultivation in general from hail. The protection sheets 90 are then hail-protection nets. However, it should be understood that the subject of the present disclosure relates to other types of protection systems as well, such as a rain-protection system, a wind-protection system or a sun-protection system; the weather-protection sheets can be nets, sheets, tarpaulins or similar elements that allow making a protection surface suitable for the specific weather-protection purpose.

A weather-protection system 9 comprises a plurality of support poles 91 driven into in the ground 98 along rows that, for example, follow the rows of the plants 99 to be protected. The support poles 91 of each row support a respective supporting cable 92, which is stretched between the support poles 91 and extends along the row at a certain height from the ground 98, defining a ridge line of the protection system 9. The supporting cables 92 bear and support the weather-protection sheets 90. In particular, each weather-protection sheet 90 is positioned astride a respective supporting cable 92, to which it is fastened. The flaps or edges of adjacent sheets 90 are joined to each other, thereby obtaining a substantially continuous protective surface that covers the plants 99 that are below the protective surface, protecting the plants 99 from bad weather.

The joining between the edges of adjacent sheets 90, which defines bottom lines of the covering protective surface, is of a removable type: when protection of plants 99 is not required, the weather-protection sheets 90 are uncoupled from each other and each of them is rolled up towards the respective supporting cable 92.

A rolled-up sheet 90 is held in the rolled-up position by the holding device 1 mounted on the supporting cable 92, in particular by a plurality of holding devices 1 that are secured to the supporting cable 92 at respective positions along the supporting cable itself.

The holding device 1 comprises a body 2 that can be mounted on a supporting cable 92 and a flexible member 3 having an elongated shape to encircle and hold a portion of the rolled-up protection sheet 90.

For example, the holding device 1 is made of plastic material, for example by moulding or injection. In particular, the body 2 and the flexible member 3 can be made in a single piece.

The body 2 is substantially box-shaped or parallelepiped-shaped, having two longitudinal faces 201, 202 on opposite sides, two transversal faces 203, 204 on opposite sides, a top face 205 and a bottom face 206. The terms "longitudinal", "transversal", "top" and "bottom" are to be understood in connection with the spatial position of the holding device 1 when this is mounted in a protection system 9; in particular, the term "longitudinal" refers to the development direction of the supporting cable 92 on which the holding device 1 is mounted, whereas the term "transversal" refers to a plane transversal to such a development direction.

The body 2 has a first through cavity or channel 21 that extends between the opposite transversal faces 203, 204 of the body 2 and has respective ends that are open on such transversal faces 203, 204. The first through cavity 21 is adapted to receive the supporting cable 92 of the protection sheet 90. As it will be further described below, the mounting of the holding device 1 on the supporting cable 92 is carried out by placing the supporting cable 92 into the first through cavity 21; the body 2 is then clamped on the supporting cable 92, so that the holding device 1 is firmly secured to the supporting cable 92 itself.

The flexible member 3 has a first portion or first end 31 that is fixed to the body 2, and a second portion 32 (or second end portion) that can be locked in a seat 25 made in the body 2.

In particular, the first end 31 is fixed at the bottom face 206 of the body 2, whereas the seat 25 is made at the top face 205 of the body 2.

The flexible member 3 can assume a first condition, in which the flexible member 3 is substantially outstretched and the second portion 32 is free, and a second condition, in which the flexible member 3 is bent substantially like a ring and the second portion 32 is received and locked in the seat 25.

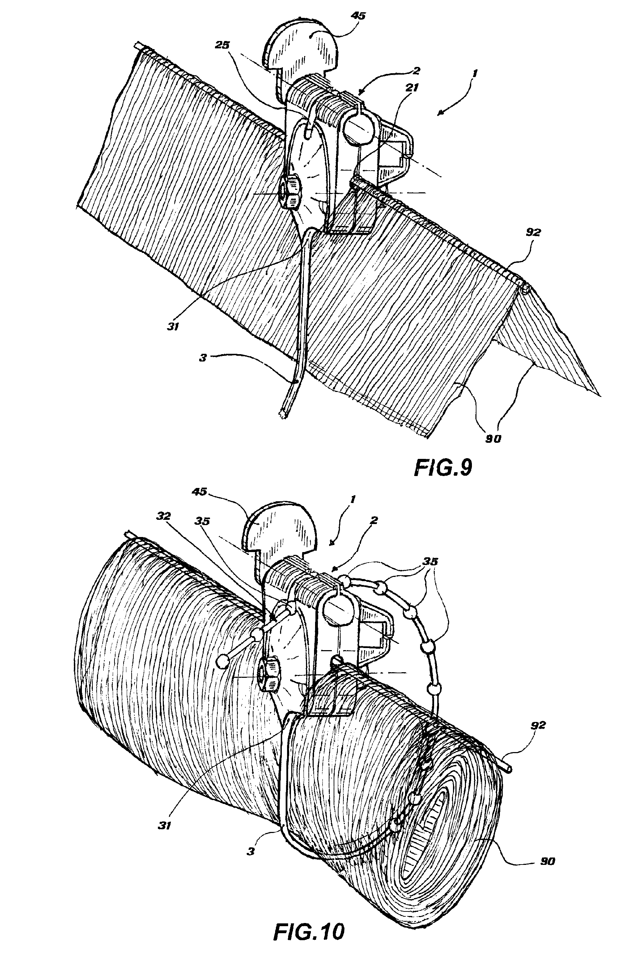

In the first condition (shown in Figure 9, for example), the flexible member 3 lets the protection sheet 90 free; therefore, the protection sheet 90 can be unrolled and spread out to make the covering protective surface; in the first condition, the flexible member 3 is substantially resting above the protection sheet 90, parallel to a flap thereof. Basically, the first condition corresponds, in use, to a release of the protection sheet 90.

In the second condition (shown in Figure 10, for example), the flexible member 3 encircles the rolled-up protection sheet 90, circling a portion of rolled-up sheet 90. Thanks to the ring-like condition of the flexible member 3 being kept by the locking of the second portion 32 in the seat 25, the flexible member 3 in the second condition prevents any unrolling of the sheet 90.

The flexible member 3 in the second condition has then the function of a tie or strap that holds the sheet 90 in the rolled-up position. Basically, the flexible member 3 is a member for holding the rolled-up sheet 90. Basically, the second condition corresponds, in use, to a hold of the rolled-up protection sheet 90 within the ring formed by the flexible member 3.

The locking of the second portion 32 of the flexible member 3 in the seat 25 is of a reversible type: when needed, the second portion 32 can be disengaged from the seat 25, so as to return the flexible member 3 into the first outstretched condition and to release the protection sheet 90, whereby allowing unrolling of the latter.

In particular, the holding device 1 comprises locking means for reversibly locking the second portion 32 of the flexible member 3 in the seat 25. The locking means engages the second portion 32 and prevents an unintentional escape of the second portion 32 from the seat 25.

In the illustrated embodiment, the locking means comprises a locking element 4 that is mounted on the body 2 and is movable between a locking position and a release position, and vice versa.

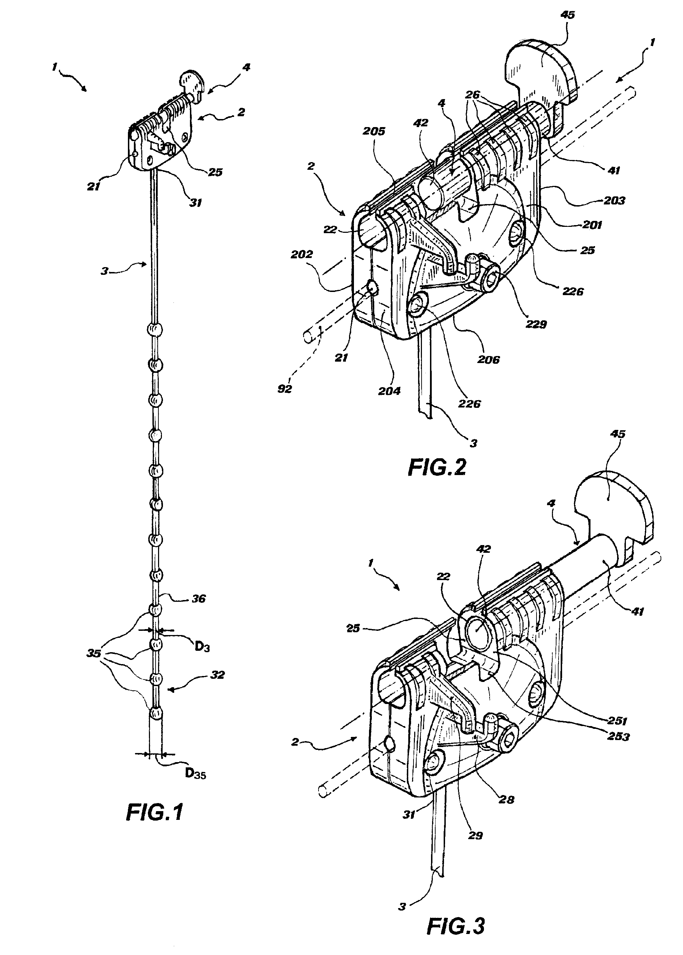

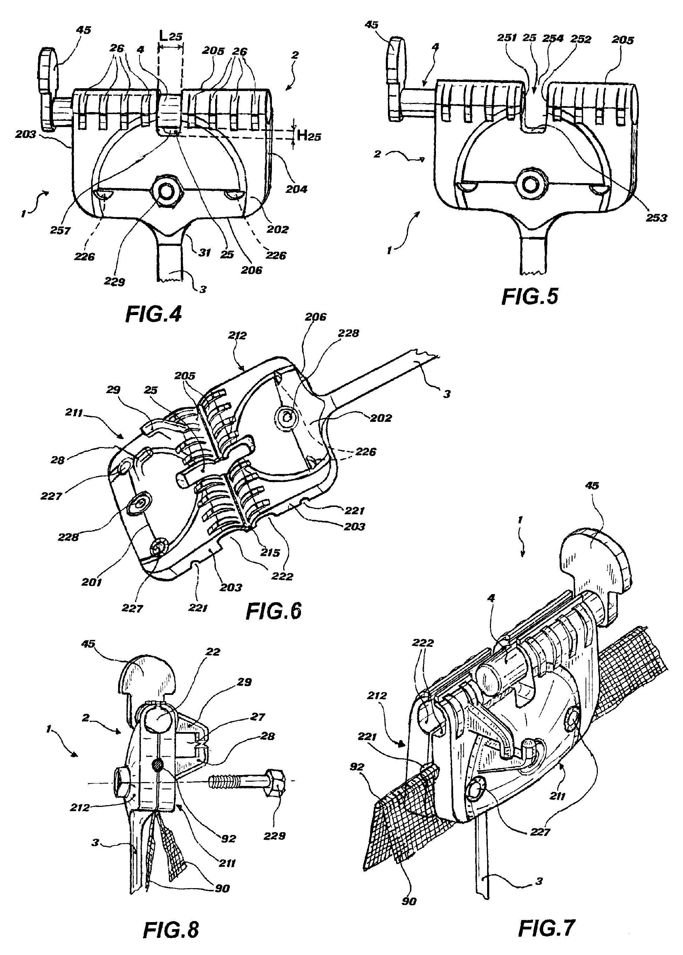

In the locking position (shown in Figures 2 and 4), the locking element 4 is adapted to lock the second portion 32 of the flexible member 3 in the seat 25, thus forcing the flexible member 3 to keep said second ring-like condition. In particular, the locking element 4 in the locking position occludes at least partially the seat 25 and engages the second portion 32, preventing the removal of the flexible member 3 from the seat 25 itself. In other words, the locking element 4 creates an obstruction inside the seat 25 that prevents the flexible member 3 (in particular its second portion 32) from releasing itself from the seat 25.

In the release position (shown in Figures 3 and 5), the locking element 4 is disengaged from the second portion 32 of the flexible member 3 and therefore it allows the removal of the latter from the seat 25. In particular, the locking element 4 in the release position lets the seat 25 free: specifically, the locking element 4 is out of the seat 25 and does not interfere with it.

In the illustrated embodiment, the movement of the locking element 4 between the locking position and the release position, and vice versa, is a translation relative to the body 2, i.e., the locking element 4 is slidingly mounted on the body 2. Specifically, the locking element 4 has a substantially piston-like shape; in particular it has an elongated cylindrical shape.

The body 2 has a second elongated cavity or channel 22, which crosses the seat 25 and has a shape that is substantially complementary to the piston-like shape of the locking element 4. The locking element 4 is received in said second cavity 22 and can slide along the latter; the sliding of the locking element 4 along the second cavity 22 implies the transition from the locking position to the release position, and vice versa.

One end of the second cavity 22 is open on at least one face of the body 2, from which a first end 41 of the locking element 4 partially protrudes. In the illustrated embodiment, this end of the second cavity 22 is open on a transversal face 203 of the body 2; moreover, the second cavity 22, after crossing with the seat 25, extends up to the other transversal face 202 of the body 2, on which it is open. The longitudinal faces 201, 202 have reinforcing ribs 26 at the second cavity 22.

In the locking position (in which the locking element 4 is further inserted in the second cavity 22), the locking element 4 crosses the seat 25 and occludes the latter at least partially, whereas in the release position (in which the first end 41 further protrudes from the transversal face 203, thus the locking element 4 is less inserted in the second cavity 22) the locking element 4 does not emerge into the seat 25.

In other words, a second end 42 of the locking element 4 moves through the seat 25 during a movement between the locking position and the release position, and vice versa.

For example, the second cavity 22 is substantially parallel to the first through cavity 21 and then to the supporting cable 92. Therefore, the movement of the locking element 4 along the second cavity 22 between the locking position and the release position is along a movement direction that is substantially orthogonal to a plane defined by the ring formed by the flexible member 3 in the second condition.

The locking element 4 can have a length less than the length of the second cavity 22. Moreover, an end-of-stroke stop system can be provided in order to prevent the locking element 4 from being entirely pulled out of the second cavity 22 without intention.

The locking element 4 has a control portion or control member 45 for controlling a movement of the locking element 4 between the locking position and the release position, and vice versa. In particular, the control member 45, which for example is a protrusion having a substantially mushroom-shaped profile, is fixed to the first protruding end 41 of the locking element 4. The control member 45 can be made in a single piece with the piston-like body of the locking element 4, for example by moulding of plastic material.

The seat 25 is slot-shaped or notch-shaped. It has two opposing side walls 251, 252 and a bottom wall 253, which bound a channel that extends between the longitudinal faces 201, 202 of the body 2 and is adapted to receive the second portion 32 of the flexible member 3. The slot or channel also has an opening or mouth 254 that is opposite to the bottom wall 253; the mouth 254 is open, for example, on the top face 205 or top edge of the body 2. The second cavity 22 is open at least on the first side wall 251 of the seat 25; in the example, the second cavity 22 goes beyond the seat 25 and is open on the second side wall 252 as well.

When the locking element 4 is in the locking position, it crosses the slot or channel of the seat 25 between the two side walls 251, 252, thus closing the mouth 254. In other words, a passage 257 for the flexible member 3 between the two longitudinal faces 201, 202 is bounded by the two side walls 251, 252, the bottom wall 253 and the locking element 4. When the locking element 4 is in the release position, the passage 257 is open on the top face 205 of the body 2 at the mouth 254, which is let open by the locking element 4.

The seat 25 occluded by the locking element 4 (i.e., the passage 257) has a width L25 between the two side walls 251, 252 and a height H25 between the bottom wall 253 and the locking element 4.

For example, the flexible member 3 is a flexible rod having a thickness or diameter

D3; the second portion 32 of the flexible member 3 comprises at least one bulge 35 having a thickness or diameter D35 that is greater than the thickness or diameter D3 of the flexible rod. For example, the bulge 35 has a spherical shape.

The thickness D3 of the rod is less than the width L25 and height H25 of the passage 257, so that a rod portion 36 without bulge 35 can be housed in the seat 25 even when the locking element 4 is in the locking position. The bulge 35 has a thickness D35 that is greater than at least one of the width L25 and the height H25 of the occluded passage 257.

The locking of the flexible member 3 in the second ring-like condition is achieved by positioning the second portion 32 so that a stretch of the rod is in the seat 25 and the bulge 35 is out of the seat 25 from a side that is opposite to the entrance side. In other words, along the flexible member 3, the stretch that crosses the seat 25 is between the first end 31 fixed to the body 2 and the bulge 35.

The thickness D35 of the bulge 35 prevents the latter from crossing the seat 25 and thus prevents the flexible member 3 from slipping out of the seat 25.

According to a first version, the thickness D35 of the bulge 35 is greater than the width L25 of the passage 257. In this case, the insertion of a stretch of the flexible member 3 into the seat 25 can take place only through the mouth 254 (i.e., from the top face 205), when the locking element 4 is in the release position. The bulge 35 abuts against the edges of the seat 25 on a longitudinal face 202 of the body 2; the subsequent displacement of the locking member 4 towards the locking position closes the mouth 254 and thus prevents the flexible member 3 from escaping out of the seat.

According to a second version, the thickness D35 of the bulge 35 is less than the width L25 of the passage 257. The height H25 of the occluded passage 257 is less than the thickness D35 of the bulge 35. In this case, the insertion of the stretch of flexible member 3 into the seat 25 can take place through the mouth 254 or along the channel of the seat 25 (i.e., by entering at one longitudinal face 201 and going out at the other longitudinal face 202), when the locking element 4 is in the release position; the subsequent displacement of the locking member 4 towards the locking position prevents the flexible member 3 from escaping out of the seat 25, because the bulge 35 abuts against the locking element 4.

In the illustrated example, the flexible member 3 (in particular, its second portion 32) comprises a plurality of bulges 35, which are placed in succession at a certain distance from each other along the same flexible member 3. A respective engagement region 36, having a thickness or diameter D3 and intended to be received in the seat 25, is defined between two successive bulges 35.

Therefore, the second portion 32 has a plurality of engagement regions 36 and it can be locked in the seat 25 by the locking means in any one of the engagement regions 36 of said plurality, according to choice by an operator. A respective size or diameter of the ring formed by the flexible member 3 in the second condition corresponds to each engagement region 36. In other words, the ring size is adjustable according to need, in particular according to the roll diameter of the rolled-up protection sheet 90.

The body 2 of the holding device 1 further comprises at least one tooth-shaped protrusion 28, which in particular protrudes from a longitudinal face 201. Such a tooth-shaped protrusion 28 has the function of supporting a control rope 95 that is connected to the locking element 4 and allows to remotely control the position of the locking element 4 itself.

In the illustrated embodiment, a lower tooth-shaped protrusion 28 and an upper tooth-shaped protrusion 29, opposing the lower protrusion 28, are provided. The protrusions 28, 29 define a housing 27 for receiving the control rope 95 between them. The tooth-like shape of the protrusions 28, 29 allows preventing the control rope 95 from unintentionally escaping out of the housing 27. The lower protrusion 28 and the upper protrusion 29 are mutually offset in the longitudinal direction to facilitate the insertion of the control rope 95 into the housing 27 during the assembling of the protection system 9.

The body 2 may comprise two half-shells 211, 212, which can be fixed to each other in a matching manner to compose the body 2. In other words, the two half-shells 211, 212 can assume an open condition, in which the two half-shells 211, 212 do not match with each other, and a closed condition, in which the two half-shells 211, 212 match with and are fixed to each other. A manufacturer supplies the body 2 in a configuration having the two half-shells 211, 212 in the open condition; the closed condition is reached when the body 2 is mounted in the protection system 9.

For example, the holding device 1 can be made in a single piece, with the shape shown in Figure 6, by injection moulding: the body 2 is open, the two half-shells 211, 212 are connected by a film hinge 215 at the top face 205 and the flexible member 3 extends from the bottom face 206 of one half-shell 212. Each half-shell 211, 212 includes recesses 221, 222 that are respective halves of the first through cavity 21 and of the second elongated cavity 22.

One half-shell 212 further comprises inwardly protruding teeth 226 that are intended to engage, in a snap-like manner, corresponding holes or seats 227 made on the other half-shell 211. The half-shells 211, 212 further comprise respective holes or seats 228 for a fastening screw or bolt 229.

Figures 6 to 9 show a mounting mode of a holding device 1 on a supporting cable 92. The body 2 is supplied in the open condition with two half-shells 211, 212 as shown in Figure 6; the locking element 4 is supplied separately. The two half-shells 211, 212 are positioned astride the supporting cable 92 (on which a protection sheet 90 has already been mounted) and are brought closer to each other by closing the body 2, so that the supporting cable 92 is housed between the recesses 221 intended to compose the first through cavity 21. The locking element 4 is positioned between the recesses 222 intended to form the second elongated cavity 22.

During the closing of the body 2, the teeth 226 snap enter into the holes 227, preventing the body 2 from spontaneously going back to the open condition. This is useful for making the task easy for the operator during the mounting; in fact, the operator can first close the body 2 on the supporting cable 92 and then he can position the device 1 on the cable 92 in a more precise way. Once a precise positioning is obtained, the two half-shells 211, 212 are firmly fixed together by the fastening bolt 229 that is inserted into the holes 228.

The fixing by bolt 229 press the half-shells 211, 212 against each other and in particular it locks the supporting cable 92 in the first cavity 21. In fact, the first through cavity 21 has a passage section (i.e., a cross section) that is narrower when the two half-shells 211, 212 are in the closed condition than when the two half-shells are in the open condition. Therefore, the closing of the two half-shells 211, 212 implies a narrowing of that passage section: the body 2 is clamped on the supporting cable 92 and secured to the latter.

Also a part of the protection sheet 90 is locked between the two half-shells 211, 212, thereby improving the connection between the sheet 90 and the supporting cable 92.

Depending on the longitudinal length of the protection sheet 90, a plurality of holding devices 1 can be mounted on a same supporting cable 92, by securing the devices 1 in respective positions that are spaced apart along the supporting cable 92. When the protection sheet 90 is spread out or unrolled to make the protective surface, the flexible member 3 is in the first condition or outstretched condition, as shown in Figure 9. The weather-protection system 9 is then in a first configuration or operating configuration, in which it protects the crop from bad weather.

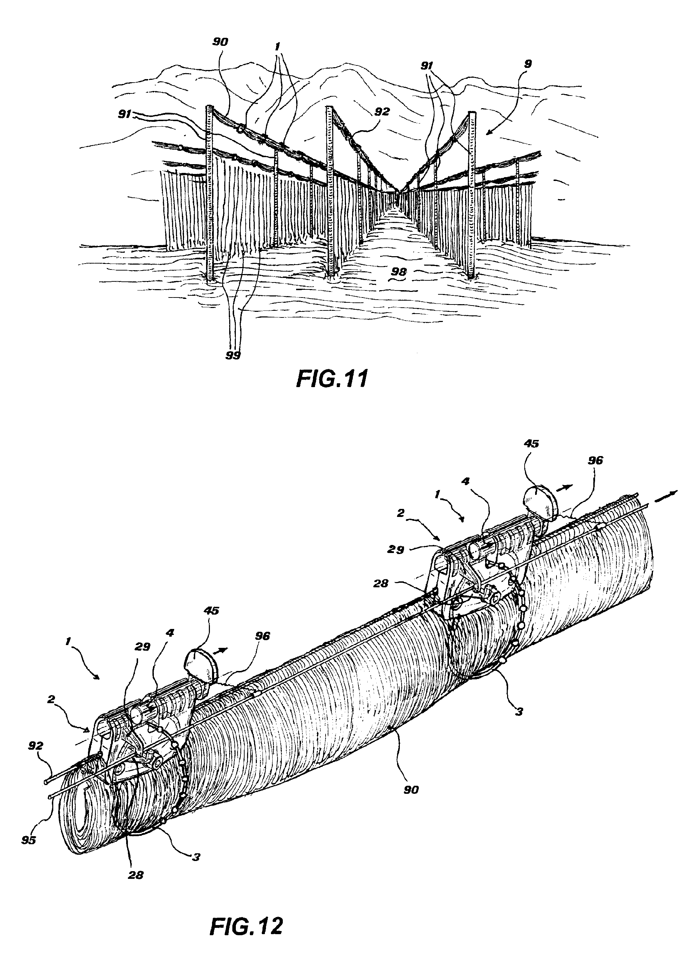

When the protection is no longer required, the protection system 9 is brought into a second configuration or non-operating configuration: the protection sheet 90 is rolled up so as to create a roll below the supporting cable 92. The flexible member 3 is passed around the roll and is locked in the seat 25 via the locking element 4 moved into the locking position. In other words, the flexible member 3 is brought into the second ring-like condition so that the ring formed by the flexible member 3 encircles the roll of protection sheet 90, holding the latter in a rolled-up and non-operating position. The locking element 4 is in the locking position and then locks the flexible member 3 in the second condition. A roll of protection sheet 90 is thus obtained; the roll, being held in the ring formed by the flexible member 3, is kept suspended to the supporting cable 92 by the holding device 1, as shown in Figures 10 and 11. Depending on the diameter of the roll of protection sheet, it is possible to select the size of the obtained ring, i.e., which part of the second portion 32 of the flexible member 3 is to be inserted into the seat 25 and then which of the bulges 35 goes to engage the locking means 4.

It should be noted that the operations to be performed for constraining the sheet 90 in rolled-up position are very simple and fast: the operations of passing the flexible member 3 around the roll, inserting the second portion 32 into the seat 25 and moving the locking element 4 towards the locking position are simple and require only a few seconds for each holding device 1. Since the holding devices 1 are already available on the supporting cables 92, the operator is not even required to have other fastening elements or specific tools at his disposal.

When the weather protection is required again, the locking element 4 of each device 1 is moved into the release position, releasing the second portion 32 and allowing the flexible member 3 to return to the first outstretched condition. The roll of protection sheet 90 is no longer held in the rolled-up position and it can be spread down to make the covering surface.

It should be noted that even the operations to be performed for releasing the roll of sheet 90 are very simple and require only a few seconds for each holding device 1. When the locking element 4 is moved into the release position, the slipping of the second portion 32 of the flexible element 3 out of the seat 25 may occur even spontaneously under the action of the weight of the sheet 90, in particular if the thickness D35 of the bulges 35 is less than the width L25 of the seat 25.

Moreover, these operations do not produce waste and rubbish: the holding device 1 remains intact and mounted on the supporting cable 92, so it is ready for a new locking of the roll of sheet 90 when needed, for an indefinite number of times.

In order to further speed up and simplify the operations for releasing the protection sheet 90, a control rope 95, which is connected to the locking element 4 and in particular to the mushroom-shaped control member 45, may be provided. The control rope 95 is adapted to pull the locking element 4 for making it slide and move between the locking position and the release position, and / or vice versa.

The control rope 95 allows a remote control of the movement of the locking element 4 from the locking position to the release position: by pulling the control rope 95 (this is an operation that can be done staying at the ground, without any need of using ladders to rise to the height of the supporting cable 92), the locking element 4 is led into the release position and the flexible member 3 can spontaneously release itself under the action of the weight of the roll of sheet 90.

When a plurality of devices 1 is mounted on a same supporting cable 92, a single control rope 95, which simultaneously controls all the devices 1 on the same supporting cable 92, can be adopted. The control rope 95 runs parallel to the supporting cable 92, passes through all the housings 27 between the protrusions 28, 29 and is connected to all the respective locking elements 4 (Figure 12).

Thus, the pull of the control rope 95 allows, with a single remote operation, to lead all the locking elements 4 into the release position, so releasing the entire roll of sheet 90.

In particular, the connection between the control rope 95 and each locking element 4 is implemented through an elastically-deformable member 96, such as an elastic cord or a spring.

Thanks to the elastic member 96, the pull stroke of the control rope 95 can be greater than the stroke of the single locking element 4. This is useful for avoiding that a locking element 4, which may be at the end of stroke before the other locking elements, could block a further stroke of the control rope 95 before all the locking elements 4 are in the release position; in other words, this is useful for ensuring that all the flexible members 3 are released and that the protection sheet 90 can be unrolled.

According to a variant embodiment, the elastic member 96 is not provided and each locking element 4 is directly connected to the control rope 95 or is connected to the control rope 95 through a non-elastic member.

In order to ensure that all the flexible members 3 are released also for this variant embodiment, an end-of-stroke stop system is not provided for the locking element 4. Therefore, the locking element 4 can be entirely pulled out of the second cavity 22 when it is pulled by the control rope 95. In other words, as a borderline case, the release position is a condition wherein the locking element 4 is completely pulled out of the second cavity 22 and is even removed from the body 2.

In still another variant embodiment of the holding device 1, the locking element 4 is not provided and the locking means are formed by the edges of the seat 25 on the longitudinal face 202 on which a bulge 35 abuts, the thickness D35 of the bulge 35 being greater than the width L25 of the passage 257. In this version, the slipping out of the flexible member 3 through the mouth 254 of the seat 25 is not physically prevented by itself; however, it is unlikely because the weight of the roll of sheet 90 tends to pull the flexible member towards the bottom wall 253 of the seat 25.

The subject of the present disclosure has been hereto described with reference to embodiments thereof. It is understood that other embodiments might exist, all relating to the same inventive core and falling within the protection scope of the claims hereinafter.

## Claims

1. A holding device (1) for holding a weather-protection sheet (90) in a rolled-up position, comprising:
- a body (2) adapted to be mounted on a supporting cable (92) for the protection sheet (90);
- a flexible member (3) having a first portion (31) fixed to said body (2), the flexible member (3) having an elongated shape and being adapted to assume a first condition, in which the flexible member (3) is substantially outstretched, and a second condition, in which the flexible member (3) is bent substantially like a ring;
- a seat (25) made in said body (2) and adapted to receive a second portion (32) of the flexible member (3) when the flexible member (3) is in said second condition;
- locking means for reversibly locking the second portion (32) of the flexible
member (3) in the seat (25),
wherein the flexible member (3) is configured for encircling the protection sheet (90) in the rolled-up position, the first condition corresponding, in use, to a release of the protection sheet (90) and the second condition corresponding, in use, to a hold of the rolled-up protection sheet (90) within the ring formed by the flexible member (3),
**characterised in that**
the locking means comprises a locking element (4) that is mounted on said body (2) and is movable between a locking position and a release position, and vice versa,
the locking element (4) in the locking position being partially occluding the seat (25) and engaging the second portion (32) to lock said second portion (32) in the seat (25),
the locking element (4) in the release position letting the seat (25) free and being disengaged from said second portion (32) to allow the removal of said second portion (32) from the seat (25).

2. The holding device (1) according to claim 1, wherein said locking element (4) has a control member (45) for controlling a movement of the locking element (4) between the locking position and the release position, and vice versa.

3. The holding device (1) according to claim 1 or 2, wherein the locking element (4) is slidingly mounted on said body (2), the movement of the locking element (4) between the locking position and the release position, and vice versa, being a translation relative to said body (2).

4. The holding device (1) according to claim 3, wherein the locking element (4) has a piston-like shape.

5. The holding device (1) according to any one of claims 1 to 4, wherein the locking element (4) is movable between the locking position and the release position along a movement direction that is substantially orthogonal to a plane defined by the ring formed by the flexible member (3) in the second condition.

6. The holding device (1) according to any one of claims 1 to 5, wherein said seat (25) is slot-shaped and has two opposing side walls (251, 252) and a bottom wall (253), said walls (251, 252, 253) bounding a channel for receiving the second portion (32) of the flexible member (3), the seat (25) further having a mouth (254) that is opposite to the bottom wall (253) and is open on a face or edge (205) of the body (2), wherein the locking element (4) in the locking position closes said mouth (254) and the locking element (4) in the release position lets said mouth (254) open.

7. The holding device (1) according to any one of claims 1 to 6, wherein the body (2) comprises at least one tooth-shaped protrusion (28, 29) that is adapted to support a control rope (95) for controlling the position of the locking element (4).

8. The holding device (1) according to any one of claims 1 to 7, wherein the size of the ring formed by the flexible member (3) in the second condition is adjustable, the second portion (32) of the flexible member (3) being lockable by the locking means (4) in a plurality of engagement regions (36), each engagement region (36) corresponding to a respective ring size.

9. The holding device (1) according to claim 8, the second portion (32) of the flexible member (3) comprising a succession of bulges (35) spaced apart from each other, wherein a respective engagement region (36) is defined between two successive bulges (35).

10. The holding device (1) according to any one of claims 1 to 9, wherein the body (2) comprises two half-shells (211, 212) that can be matched and fixed to each other to compose said body (2), the two half-shells (211, 212) defining between them a through cavity (21) for receiving a supporting cable (92) for the protection sheet (90), the two half-shells (211, 212) being able to assume an open condition, in which the two half-shells (211, 212) do not match with each other, and a closed condition, in which the two half-shells (211, 212) match with and are fixed to each other, said through cavity (21) having a passage cross-section that, when the two half-shells (211, 212) are in the closed condition, is narrower than the passage cross-section when the two half-shells (211, 212) are in the open condition, such a narrowing of the passage cross-section allowing a clamping of the body (2) on the supporting cable (92) received in the through cavity (21).

11. A weather-protection system (9), comprising a supporting cable (92), a weather-protection sheet (90) mounted on said supporting cable (92) and at least one holding device (1) according to any one of claims 1 to 10, the holding device (1) being secured to the supporting cable (92),
wherein the system (9) is adapted to assume a first configuration and a second configuration such that:
- in the first configuration, the flexible member (3) of the holding device (1) is in the first outstretched condition and the protection sheet (90) is unrolled to make a protective surface; and
- in the second configuration, the protection sheet (90) is rolled up in a non-operating condition and the flexible member (3) is in the second ring-like condition, the ring formed by the flexible member (3) being encircling the rolled-up protection sheet (90), the locking element (4) being in the locking position and locking the flexible member (3) in the second condition, the rolled-up protection sheet (90) being held in the ring formed by the flexible member (3).

12. The weather-protection system (9) according to claim 11, comprising a control rope (95) for controlling the position of the locking element (4), the control rope (95) being connected to the locking element (4) to implement a remote control of the movement of the locking element (4) from the locking position to the release position.

13. The weather-protection system (9) according to claim 12, comprising a plurality of said holding devices (1), each holding device (1) being secured to the supporting cable (92) at a respective position along the supporting cable (92) itself, the control rope (95) being connected to all the locking elements (4) of said plurality of holding devices (1) to implement a remote control of the movement of all the locking elements (4), simultaneously.

14. The weather-protection system (9) according to claim 13, wherein each locking element (4) is connected to the control rope (95) through a respective elastically-deformable member (96).
